# EUROPÄISCHE PATENTANMELDUNG

(11) **EP 0 746 061 A2**
(43) Veröffentlichungstag der Anmeldung: **04.12.1996**
(21) Anmeldenummer: 96108380.5
(22) Anmeldetag: 25.05.1996
(51) Int. Cl.: H01R 13/66

(54) **Elektrische Steckvorrichtung**

(30) Priorität: 01.08.1995 DE 19528262; 31.05.1995 DE 19519896
(71) Anmelder: Gebrüder Merten GmbH & Co. KG, D-51674 Wiehl (DE)
(72) Erfinder: Erbse, Karl-Ulrich, Dipl.-Phys., 51647 Gummersbach (DE); Gringmann, Klaus, 51647 Gummersbach (DE); Schmidt, Helmut, Dipl.-Ing., 51647 Gummersbach (DE); Stefanski, Manfred. Dipl.-Ing., 51647 Gummersbach (DE); Vicktorius, Richard, Dipl.-Ing., 50739 Köln (DE)
(74) Vertreter: Selting, Günther, Dipl.-Ing.

(57) **Zusammenfassung**

Die Steckvorrichtung besteht aus einer Steckdose (SD) und einem Stecker (ST), der in zwei unterschiedlichen Orientierungen in die Steckdose eingesteckt werden kann. Damit die Steckvorrichtung außerdem Lichtsignale übertragen kann, enthalten der Stecker und die Steckdose Lichtleiter. Jeweils ein Lichtleiter (24,34) befindet sich im Zentrum von Steckdose und Stecker. Diese Lichtleiter stoßen bei jeder Orientierung stumpf gegeneinander. Steckdose und/oder Stecker enthalten außerdem einen Y-Splitter (23,33), deren Zweig mit dem zentralen Lichtleiter (24,34) in einer Linie liegt. Auf diese Weise werden bei jeder der beiden Orientierungen des Steckers in bezug auf die Steckdose Lichtsignale in beiden Richtungen übertragen.

## Beschreibung

Die Erfindung betrifft eine elektrische Steckvorrichtung, die aus einer Steckdose und einem Stecker besteht, wobei der Stecker in unterschiedlichen Orientierungen seiner Kontaktelemente in die Steckdose einsteckbar ist und die Steckvorrichtung außerdem Signale über Lichtleiter überträgt.

Aus DE 32 26 265 A1 ist ein flexibles elektrisches Kabel bekannt, das außer den elektrischen Versorgungsleitungen für den Netzanschluß eines Gerätes einen Lichtleiter enthält, über den Signale übertragen werden können. Während elektrische Signalleitungen, die zusammen mit Versorgungsleitungen in einem gemeinsamen Kabel verlegt sind, von den Versorgungsleitungen gestört werden (Übersprechen), werden Lichtsignale durch Ströme oder Spannungen der Versorgungsleitungen nicht beeinflußt.

Aus DE 32 27 770 C2 ist eine elektrische Steckvorrichtung mit einer Steckdose bekannt, die den Anschluß eines Netzkabels an installierte Netzleitungen ermöglicht und außerdem einen gebäudeseitig installierten Lichtwellenleiter mit einem Lichtwellenleiter des anzuschließenden Kabels optisch verbindet. Hierzu ist wenigstens ein Kontaktteil der elektrischen Steckvorrichtung der Steckdose zugleich als Lichtwellenleiter-Steckvorrichtung ausgebildet. Die Steckvorrichtung verbindet daher den elektrischen und den optischen Teil eines Kabels mit den gebäudeseitigen elektrischen Versorgungsleitungen und den optischen Datenleitungen. Hierbei kann der Stecker zwar in unterschiedlichen Orientierungen seiner Kontaktelemente in die Steckdose eingesteckt werden, jedoch bereitet es erhebliche konstruktive und technische Schwierigkeiten, die Lichtübertragung durch die elektrischen Kontaktelemente hindurch vorzunehmen.

Der Erfindung liegt die Aufgabe zugrunde, eine elektrische Steckvorrichtung zu schaffen, die die Übertragung von Lichtsignalen ermöglicht, wobei die Lichtsignalübertragung konstruktiv und räumlich von den elektrischen Kontaktelementen getrennt ist und die Übertragung von Lichtsignalen in jeder der beiden Orientierungen des Steckers in bezug auf die Steckdose ermöglicht.

Die Lösung dieser Aufgabe erfolgt erfindungsgemäß mit den im Patentanspruch 1 angegebenen Merkmalen.

Bei der erfindungsgemäßen Steckvorrichtung enthält die Steckdose und/oder der Stecker außerhalb der Kontaktelemente mindestens zwei Fenster für den Lichtaustausch. Zwei dieser Fenster sind durch einen Y-Splitter gekoppelt und symmetrisch zueinander angeordnet, so daß eines von ihnen in jeder Orientierung des Steckers mit demselben Fenster des anderen Teils von Steckdose und Stecker zur Deckung kommt. Auf diese Weise wird erreicht, daß der Stecker in beliebiger Orientierung in die Steckdose eingesteckt werden kann, wobei in jeder Orientierung ein Lichtübergang gewährleistet ist.

Gemäß einer bevorzugten Ausgestaltung der Erfindung sind drei Fenster in einer Reihe angeordnet, wobei das mittlere Fenster im Zentrum liegt und daher bei jeder Orientierung des Steckers benutzt wird, während die beiden äußeren Fenster seitlich angeordnet sind. Die beiden äußeren Fenster sind durch den Y-Splitter untereinander verbunden. Es ist möglich, die beiden äußeren Fenster zugleich zu benutzen, oder auch nur eines dieser beiden Fenster.

Alternativ besteht die Möglichkeit, daß an Steckdose und Stecker jeweils vier Fenster im Quadrat angeordnet sind, wobei jeweils zwei diagonal gegenüberliegende Fenster durch einen Y-Splitter miteinander gekoppelt sind. In diesem Fall ist im Zentrum von Steckdose und Stecker kein Fenster angeordnet und dieser Bereich steht für eine Befestigungsschraube zur Verfügung.

Vorzugsweise ist der Y-Splitter Bestandteil eines Lichtleiter-Anschlußstücks, welches Anschlußvorrichtungen für den Anschluß externer Lichtleiter aufweist. In dem Lichtleiter-Anschlußstück können außer dem Y-Splitter noch ein weiterer Y-Splitter oder ein unverzweigter Lichtleiter enthalten sein. Das Lichtleiter-Anschlußstück dient dazu, die Lichtleiter im Innern der Steckdose oder des Steckers genau zu positionieren, um externe Lichtleiter anschließen zu können. Vorzugsweise enthält das Lichtleiter-Anschlußstück einen Formkörper, in dem der Y-Splitter und ggf. weitere Lichtleiter eingebettet sind.

Im folgenden werden Ausführungsbeispiele der Erfindung unter Bezugnahme auf die Zeichnungen näher erläutert.

Es zeigen:
- Fig. 1: eine Frontansicht einer Steckdose nach der Erfindung,
- Fig. 2: eine Ansicht der Steckdose bei abgenommenem Einsatz,
- Fig. 3: einen Schnitt entlang der Linie III-III von Fig. 2,
- Fig. 4: einen Schnitt entlang der Linie IV-IV von Fig. 3,
- Fig. 5: eine andere Ausführungsform des den Y-Splitter enthaltenden Formstücks,
- Fig. 6: einen Schnitt entlang der Linie VI-VI von Fig. 5,
- Fig. 7: Stecker und Steckdose im zusammengesetzten Zustand,
- Fig. 8: eine andere Ausführungsform einer Steckdose,
- Fig. 9: eine andere Ausführungsform eines Steckers,
- Fig. 10: ein Schaltschema der Lichtleiter-Anschlußstücke von Steckdose und Stecker,
- Fig. 11: ein anderes Schaltschema der Lichtleiter-Anschlußstücke von Steckdose und Stecker,
- Fig. 12: eine Ansicht einer weiteren Ausführungsform einer Steckdose, die mit zwei Y-Splittern versehen ist,
- Fig. 13: einen Schnitt durch eine Steckvorrichtung mit je zwei Fenstern für den Lichtaustausch,
- Fign. 14 bis 16: den Stecker eines Verbindungskabel mit Lichtleitern, und
- Fign. 17 bis 19: die Kupplung eines Verbindungskabels mit Lichtleitern.

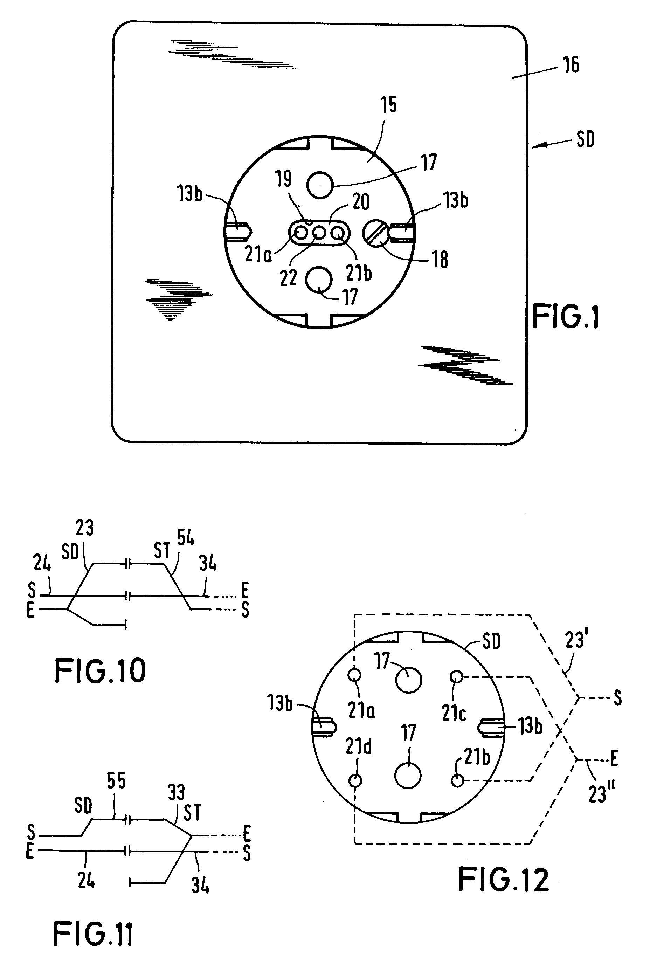

Bei dem Ausführungsbeispiel der Fign. 1-7 ist eine Steckdose SD vorgesehen, in die ein Stecker ST eingesteckt werden kann. Die Steckdose SD ist grundsätzlich wie eine übliche genormte Steckdose des Stromversorgungsnetzes ausgebildet. Sie enthält einen Sockel 10 aus Isoliermaterial, an dem elektrische Anschlußklemmen 11 für Stromleiter und Kontaktklemmen 12 angebracht sind. Außerdem ist ein Schutzleiterbügel 13 vorgesehen, der eine Schutzleiter-Anschlußklemme 13a sowie seitliche Federarme 13b zum Angreifen an dem Stecker ST aufweist. Der Sockel 10 ist mit Spreizkrallen versehen, die gespannt werden können, um in eine Unterputzdose einzugreifen und die Steckdose darin festzuhalten. An dem Sockel 10 ist ein Frontrahmen 14 befestigt, der gegen die Wand gesetzt werden kann, wenn der Sockel 10 in die Wanddose eintaucht. Vor den Sockel 10 ist ein topfförmiger Einsatz 15 gesetzt, der von einem Blendenrahmen 16 umgeben ist. Dieser Einsatz 15 bildet die Fassung zur Aufnahme des Steckerkörpers. Er weist Löcher 17 zum Einstecken der Kontaktelemente des Steckers auf und in seiner Seitenfläche Schlitze, durch die die Schutzleiter-Federarme 13b hindurchragen, um an dem Steckerkörper angreifen zu können. Der Einsatz 15 ist mit einer Schraube 18 an dem Sockel 10 befestigt.

In der Bodenwand des topfförmigen Einsatzes 15 befindet sich eine längliche durchgehende Ausnehmung 19, in der die drei Fenster eines Lichtleiter-Anschlußstücks 20 in einer Reihe angeordnet sind. Diese Fenster sind mit 21a, 21b und 22 bezeichnet. Das Fenster 22 befindet sich im geometrischen Zentrum der Steckdose. Sein Mittelpunkt liegt dort, wo die Ebene, in der die Kontaktelemente 12 bzw. die Löcher 17 liegen, und die Ebene, in der die Federarme 13b liegen, sich schneiden. Die Reihe der Fenster 21a,22,21b verläuft rechtwinklig zu der die Mittelpunkte der Löcher 17 verbindenden Geraden und in derjenigen Ebene, in der die Federarme 13b liegen. Die Fenster sind in der Bodenebene des Einsatzes 15 angeordnet.

Das Lichtleiter-Anschlußstück 20 enthält einen lichtleitenden Y-Splitter 23, dessen einer Zweig 23a zu dem Fenster 21 führt und dessen anderer Zweig 23b zu dem Fenster 21b führt. Beide Zweige vereinigen sich zu einem Stamm 23c, der im Sockel 10 nach hinten ragt. Von dem mittleren Fenster 22 erstreckt sich ein gebogener Lichtleiter 24 ebenfalls im Sockel 10 nach hinten. Dieser Lichtleiter 24 besteht hier aus einem einzigen Strang.

Am rückwärtigen Ende des Sockels 10 ist ein Gehäuse 25 angeformt, das auf einem Schaltungsträger 26 in Form einer Leiterplatte eine elektronische Schaltung trägt. Bei dieser Schaltung handelt es sich beispielsweise um einen Busankoppler BA für ein Hausleitsystem, dessen Busleitungen im Gebäude installiert sind und mit dem Busankoppler verbunden sind. Der Busankoppler BA erzeugt Signale für ein externes elektrisches Gerät, das über die Steckdose SD einerseits an das Stromnetz angeschlossen wird, andererseits aber auch mit dem gebäudeseitig installierten Bussystem Signale austauschen soll. Das Bussystem arbeitet elektronisch, jedoch werden von den Steckdosen SD aus die Signale als Lichtsignale zu den externen Geräten geführt. Auch der Signalverkehr von dem externen Gerät zum Busankoppler BA erfolgt durch Lichtsignale.

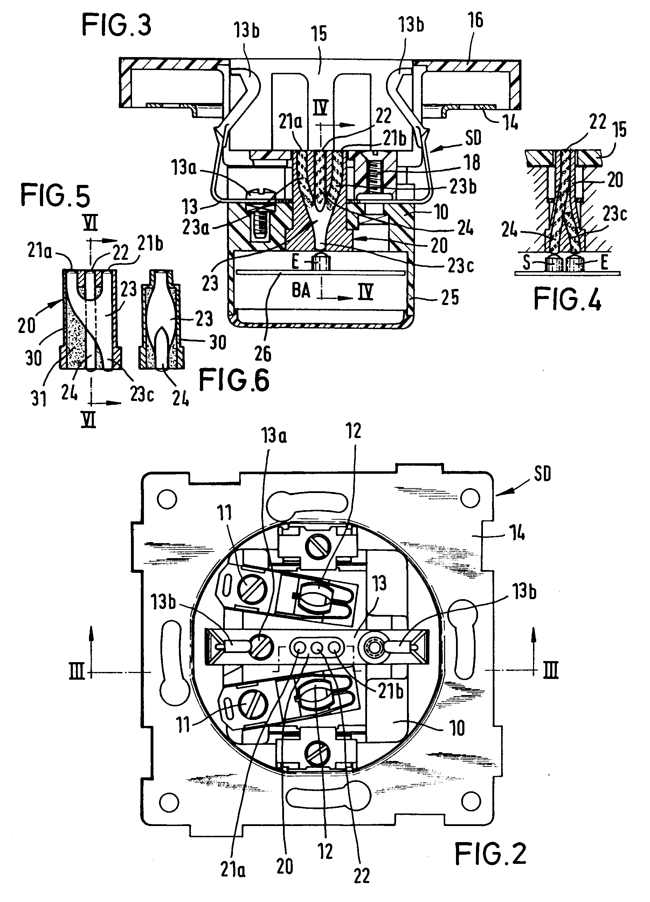

Der Busankoppler BA enthält einen Lichtsender S und einen Lichtempfänger E, die vorzugsweise auf dem Schaltungsträger 26 angeordnet sind. In Fig. 3 ist nur der Lichtempfänger E sichtbar, während in Fig. 4 auch der Lichtsender S sichtbar ist. Der Lichtsender ist dem Ende des Lichtleiters 24 gegenüber angeordnet, so daß seine Lichtsignale in diesen mittleren Lichtleiter 24, der zum Fenster 22 führt, eingekoppelt werden. Der Lichtsender ist beispielsweise eine lichtemittierende Diode. Der Lichtempfänger E ist gegenüber dem Stamm 23c des Y-Splitters 23 angeordnet, so daß die Lichtsignale, die den Y-Splitter 23 durch die Fenster 21a und 21b erreichen, zum Lichtempfänger E geführt werden. Bei dem Lichtempfänger handelt es sich beispielsweise um einen Phototransistor oder eine Photodiode. Über den Lichtsender S übermittelt der Busankoppler BA Lichtsignale zu dem externen elektrischen Gerät und über den Lichtempfänger E empfängt er Lichtsignale von dem externen elektrischen Gerät.

Das Anschlußstück 20 weist einen aus Kunststoff bestehenden Formkörper auf, in den der Y-Splitter 23 und der Lichtleiter 24, beispielsweise durch Umspritzen, eingebettet sind.

Die Fign. 5 und 6 zeigen eine Variante des Anschlußstücks 20, wobei der Y-Splitter 23 aus einem Formteil besteht, das den anderen Lichtleiter 24 umhüllt, derart, daß die Fenster 21a,22,21b sämtlich in einer Reihe liegen, die gegenüber angeordneten beiden Anschlüsse der Lichtleiter aber ebenfalls in einer Reihe liegen. Der Y-Splitter 23 und der Lichtleiter 24 sind in einem Gehäuse 30 enthalten, in dem die fensterseitigen Enden der Lichtleiter mit hoher Präzision fixiert sind und das anschließend mit einem härtenden Kunststoff 31 ausgegossen ist.

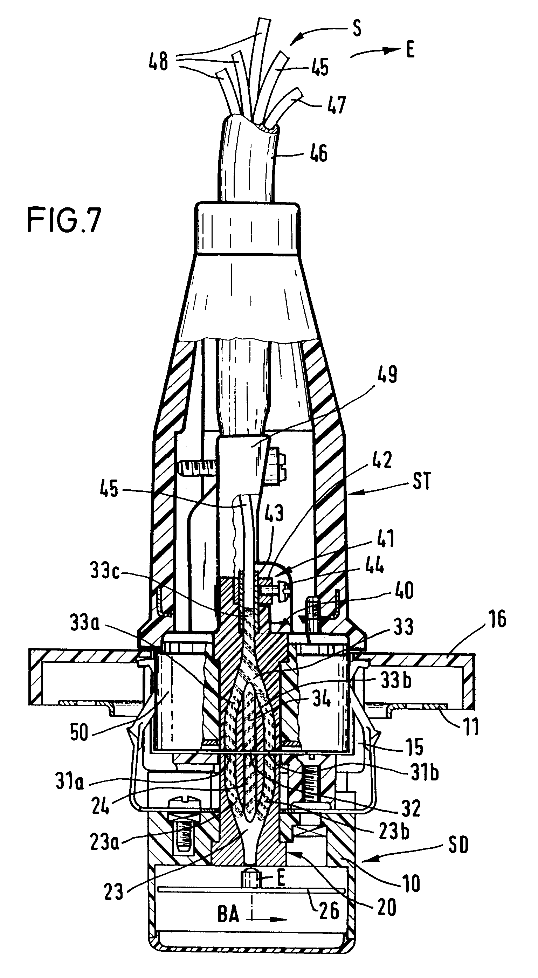

Fig. 7 zeigt die elektrische Steckvorrichtung, wobei der Stecker ST in die Steckdose SD eingesteckt ist. Der Stecker ST weist an seiner Stirnfläche, die der Bodenwand der Steckdose SD zugewandt ist, drei Fenster 31a,32,31b auf, die mit den entsprechenden Fenstern der Steckdose zur Deckung kommen. Außer den elektrischen Kontaktelementen, die mit den Kontaktelementen der Steckdose zusammengreifen, enthält der Stecker ST ein Lichtleiter-Anschlußstück 40. Das Lichtleiter-Anschlußstück 40 enthält einen Y-Splitter 33 und einen unverzweigten zentralen Lichtleiter 34. Die Zweige 33a,33b des Y-Splitters enden in den Fenstern 31a,31b, während der Lichtleiter 34 in dem mittleren Fenster 32 endet.

Das Lichtleiter-Anschlußstück 40 des Steckers ST ist in diesen Stecker in definierter Position und Orientierung eingesetzt und dort z.B. durch Kleben befestigt. Es enthält eine Anschlußvorrichtung 41 aus einem starren Ring 42, in dem eine deformierbare Hülse 43 sitzt. Durch Festziehen einer Schraube 44, die in den Ring 42 eingeschraubt ist, wird die Hülse 43 deformiert und sie klemmt die Lichtleiter, die von beiden Enden her in die Hülse eingesteckt sind, in gegenseitiger axialer Ausrichtung fest. In Fig. 7 ist dargestellt, daß in die Hülse 43 der Stamm 33c des Y-Splitters 33 von einem Ende her eingesteckt ist und vom anderen Ende her ein Lichtleiter 45 eines an den Stecker ST angeschlossenen Kabels 46. Eine weitere Anschlußvorrichtung 41 ist auch für den weiteren Lichtleiter 47 des Kabels vorgesehen, der mit dem Lichtleiter 34 des Lichtleiter-Anschlußstücks 40 optisch gekoppelt wird. Das Kabel 46 enthält außer den elektrischen Adern 48 die beiden Lichtleiter 45 und 47, die zu dem angeschlossenen externen Gerät führen und deren Lichtsignale dort in elektrische Signale umgewandelt werden. Das Ende des Kabels 46 ist mit einer Zugentlastung 49 verbunden, die ihrerseits vom Steckersockel 50 absteht.

Lichtsignale, die von dem externen Gerät ausgesandt werden, werden über den Lichtleiter 45 zu dem Lichtleiter-Anschlußstück 40 des Steckers übertragen und dort durch die Zweige 33a,33b ausgesandt. Diese Signale werden von den Zweigen 23a,23b des Lichtleiter-Anschlußstücks 20 der Steckdose SD empfangen und zum Lichtempfänger E geleitet, wo sie in elektrische Signale umgewandelt werden.

Signale, die von dem Lichtsender S der Steckdose SD ausgesandt werden, werden durch den zentralen Lichtleiter 24 der Steckdose SD zu dem zentralen Lichtleiter 34 des Steckers ST übertragen und von dort zu dem Lichtleiter 47, der zu dem externen Gerät führt.

Der zweipolige Stecker, der zwei Kontaktelemente in Form von vorstehenden Stiften aufweist, kann in zwei unterschiedlichen Orientierungen in die Steckdose eingesetzt werden, da die Steckvorrichtung keine Unverwechselbarkeitseinrichtung aufweist. Eine solche Unverwechselbarkeitseinrichtung würde das Einsetzen in nur einer ganz bestimmten Orientierung zulassen. Wenn der Stecker in anderer Orientierung in die Steckdose eingesetzt wird, gelangt der Zweig 33b mit dem Zweig 21a in Ausrichtung und der Zweig 33a gelangt mit dem Zweig 23b in Ausrichtung.

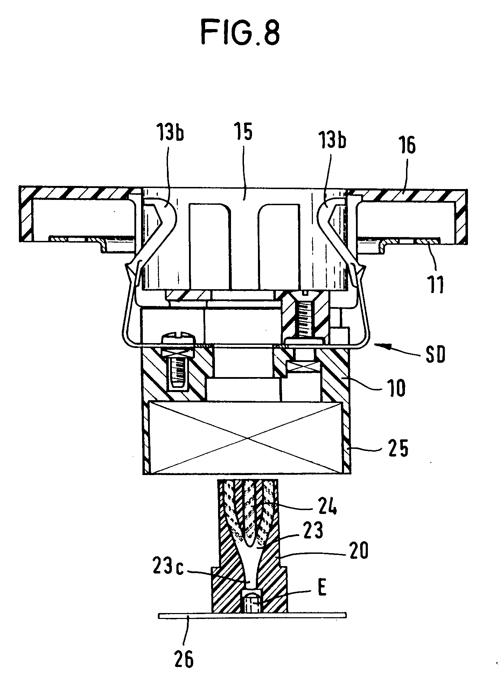

Fig. 8 zeigt eine Steckdose SD, die generell in gleicher Weise ausgebildet ist wie die Steckdose des ersten Ausführungsbeispiels. Unterschiedlich ist, daß der Schaltungsträger 26, d.h. die Leiterplatte, die den Lichtsender und den Lichtempfänger trägt, unmittelbar an das Lichtleiter-Anschlußstück 20 angesetzt und mit diesem verbunden ist. Das Lichtleiter-Anschlußstück enthält einen Hohlraum, in dem der Lichtempfänger E angeordnet ist, und einen weiteren Hohlraum, in dem der Lichtsender S angeordnet ist. Der Vorteil dieser Ausführungsform besteht darin, daß eine vorgegebene feste Ankopplung von Lichtempfänger und Lichtsender an die jeweiligen Lichtleiter existiert, die nicht durch Einbautoleranzen verändert werden kann. Das Lichtleiter-Anschlußstück ist auch hier in den Sockel bis zum Anschlag eingesetzt und dort festgeklebt.

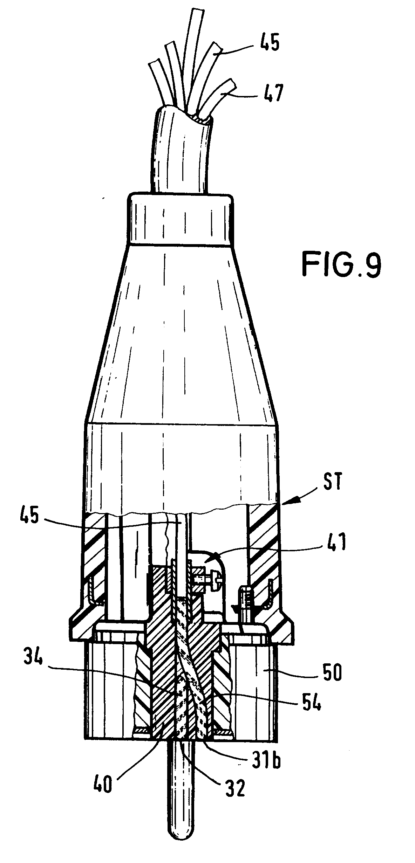

Der Stecker ST des Ausführungsbeispiels von Fig. 9 unterscheidet sich von dem ersten Ausführungsbeispiel dadurch, daß in ihm kein Y-Splitter vorhanden ist. Der Stecker hat demnach auch nur zwei Fenster 31b,32. Das Fenster 32 dient dazu, Lichtsignale von der Steckdose zum Lichtleiter 47 zu übertragen. Das Fenster 31b dient dazu, Lichtsignale von dem Lichtleiter 45 über den im Lichtleiter-Anschlußstück 40 enthaltenen unverzweigten Lichtleiter 45 zur Steckdose zu übertragen. Abhängig von der Orientierung, mit der der Stecker in die Steckdose eingesteckt ist, kommt das Fenster 31b entweder mit dem Fenster 21a oder dem Fenster 21b der Steckdose zur Deckung. Wenn der Stecker keinen Y-Splitter enthält, muß die Steckdose einen Y-Splitter enthalten. Andererseits kann die Steckdose ohne Y-Splitter ausgebildet sein, jedoch muß in diesem Fall der Stecker einen Y-Splitter enthalten.

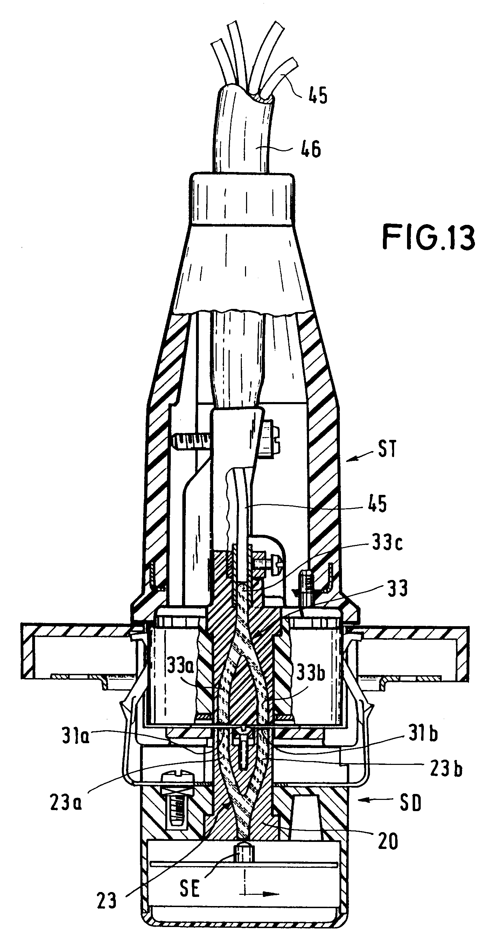

Diese Möglichkeiten sind schematisch in den Fign. 10 und 12 dargestellt. Hier sind jeweils links die Steckdose SD und rechts der Stecker ST gezeigt, wobei die Steckdose einen Lichtsender S und einen Lichtempfänger E enthält. Der Stecker ST ist an ein Kabel angeschlossen, das an seinem anderen Ende mit einem Lichtsender S und einem Lichtempfänger E verbunden ist.

Gemäß Fig. 10 enthält die Steckdose SD einen Y-Splitter 23, der an den Empfänger E der Steckdose angeschlossen ist, während der Stecker ST zwei unverzweigte Lichtleiter 34,45 enthält.

In Fig. 11 sind die Verhältnisse umgekehrt. Dort enthält der Stecker ST einen Y-Splitter 33, der mit dem Empfänger E des externen Geräts gekoppelt ist, während die Steckdose SD zwei unverzweigte Lichtleiter 24,45 enthält. In jedem Fall ist der Y-Splitter so geschaltet, daß sein Stamm stets an einen Lichtempfänger E angeschlossen ist. Auf diese Weise werden halbierende Lichtverluste durch Strahlteilung vermieden.

Fig. 12 zeigt eine Steckdose SD in Frontansicht bei einem weiteren Ausführungsbeispiel, wobei die Verteilung der Fenster 21a,21b,21c,21d erkennbar ist. Die Fenster sind an den Ecken eines gedachten Quadrats angeordnet, wobei die einander diagonal gegenüberliegenden Fenster 21a,21b durch einen ersten Y-Splitter 23' und die beiden anderen Fenster 21c,21d durch einen zweiten Y-Splitter 23'' verbunden sind. Die Y-Splitter befinden sich natürlich im Innern der Steckdose und sind in Fig. 12 nur schematisch dargestellt. Der zugehörige Stecker hat vier entsprechende Fenster in gleicher Anordnung wie die Steckdose und ebenfalls zwei Y-Splitter oder einen Y-Splitter und einen unverzweigten Lichtleiter.

Bei dem Ausführungsbeispiel von Fig. 13 enthält die Steckdose SD eine Y-Splitter 23, dessen Stamm mit einem optischen Sendeempfänger SE optisch gekoppelt ist und dessen Zweige 23a,23b symmetrisch zur Mittelachse der Steckdose SD angeordnet sind. Ein weiterer Lichtleiter ist in der Steckdose nicht vorhanden. Der Stecker ST enthält einen Y-Splitter 33, dessen beide Zweige 33a,33b im eingesteckten Zustand des Steckers mit den Zweigen 23a,23b der Steckdose SD fluchten. Ein weiterer Lichtleiter ist im Stecker nicht vorhanden. Der Stamm 33c des Y-Splitters 33 ist optisch mit dem Ende eines Lichtleiters 45 gekoppelt, der durch das Kabel 46 hindurch verläuft.

Die Ausführungsform nach Fig. 13 ist zweckmäßig, wenn eine zentrische Anordnung der Lichtleiter in Stecker und Steckdose nicht möglich ist. Die beiderseitige Gabelung der Y-Splitter ist sinnvoll, weil bei der bidirektionalen Datenübertragung Informationen in beiden Richtungen laufen. Eine einadrige Kopplung des Steckers mit dem Y-Splitter der Steckdose würde zu einer sehr hohen Dämpfung (Lichtverlust) führen. Eine solche Dämpfung wird durch die Y-Splitter 23 und 33 in Steckdose und Stecker vermieden.

Bei den vorstehend beschriebenen Ausführungsbeispielen bestehen die Fenster, an denen das Licht zwischen Steckdose und Stecker übertritt, aus den Enden der jeweiligen Lichtleiter. Es ist aber auch möglich, an den Fenstern Linsen, Scheiben oder andere optische Einrichtungen vorzusehen.

Die Steckvorrichtung kann auch dazu benutzt werden, ein gebäudeseitig installiertes Lichtleitersystem mit einem externen Gerät zu verbinden. In diesem Fall sind in der Steckdose kein Lichtsender und kein Lichtempfänger angeordnet, sondern die Steckdose ist an das installierte Lichtleitersystem angeschlossen.

Sowohl der Stecker als auch die Steckdose können in Verbindung mit üblichen Steckdosen und Stecker benutzt werden, die keine Lichtleiter enthalten. Sowohl Steckdose als auch Stecker sind also mit üblichen Steckern und Steckdosen kompatibel, wenn ausschließlich elektrische Anschlüsse hergestellt werden sollen.

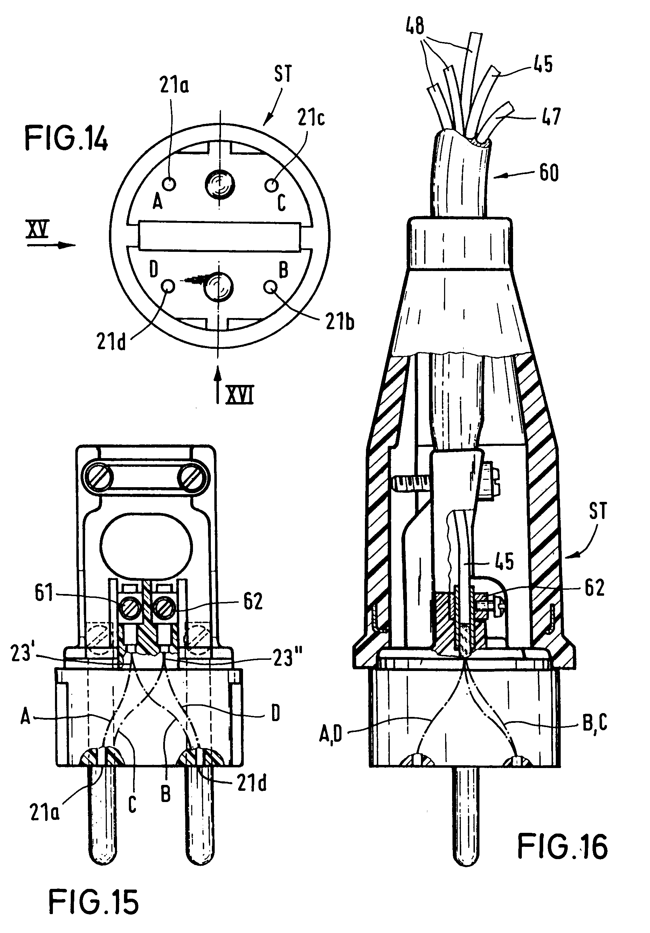

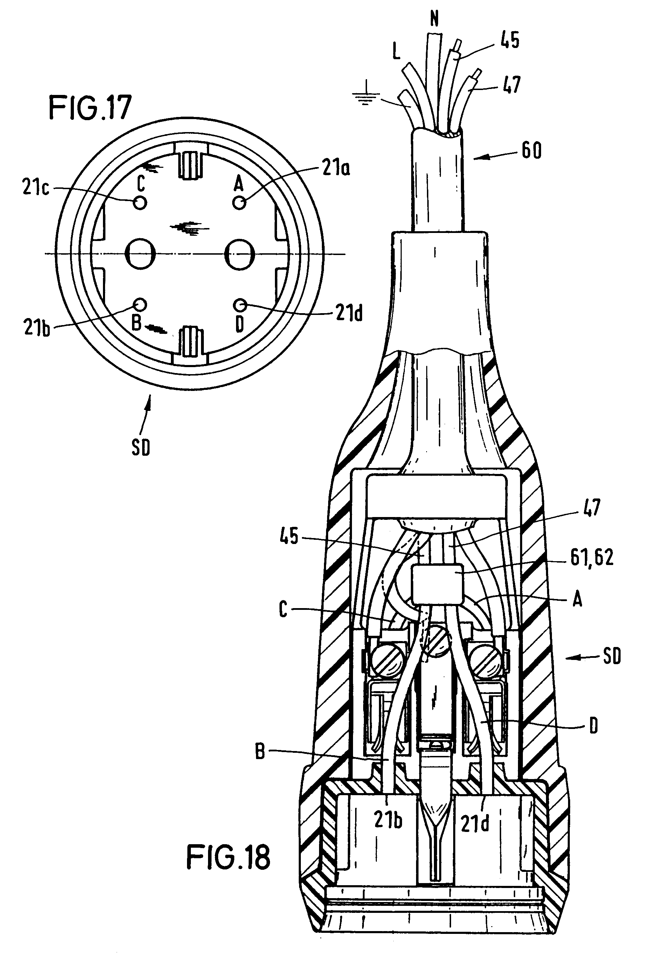

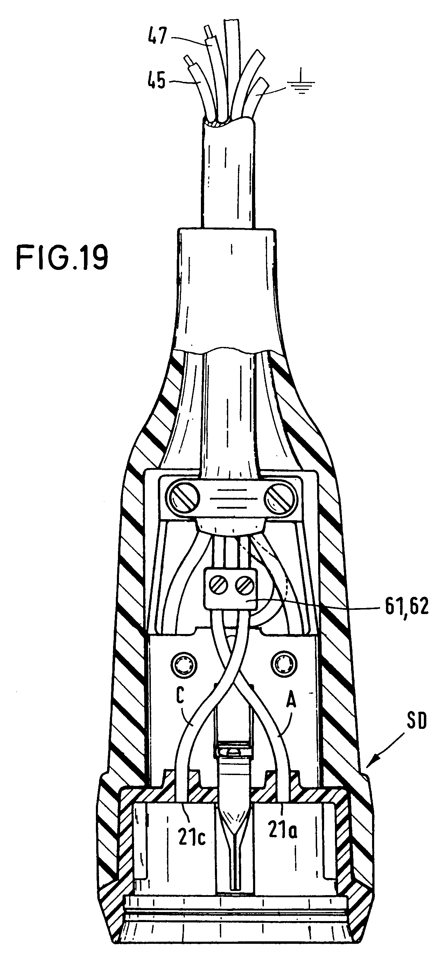

In den Figuren 14 bis 16 ist der Stecker eines Verbindungskabels dargestellt und in den Figuren 17 bis 19 die am anderen Ende des Verbindungskabels vorgesehene Fassung. Das Verbindungskabel 60 enthält außer den elektrischen Leitungen die beiden Lichtleiter 45 und 47. Der Stecker ST und die Kupplung oder bewegliche Steckdose SD des Anschlußkabels 60 sollen in jeder der beiden möglichen Stellungen verwendet werden, ohne daß es auf eine bestimmte Polung der elektrischen Kontaktelemente ankommt.

Aus diesem Grunde ist der Stecker ST mit vier an den Ecken eines Quadrates angeordneten Fenstern 21a,21b,21c und 21d versehen, an denen jeweils ein Lichtleiter A,B,C oder D endet. Die anderen Enden der Lichtleiter A und B, deren Fenstern 21a und 21b einander diagonal gegenüberliegen, sind in einem Y-Splitter 23' zusammengefaßt, dessen Stamm mit einer Anschlußvorrichtung 61 verbunden ist. Die Lichtleiter C und D, deren Fenster 21c und 21d ebenfalls diagonal zueinander angeordnet sind, sind in einem Y-Splitter 23'' zusammenfaßt, dessen Stamm mit einer Anschlußvorrichtung 62 verbunden ist. An die Anschlußvorrichtung 61 ist der Lichtleiter 45 angeschlossen und an die Anschlußvorrichtung 62 der Lichtleiter 47. Die beiden Lichtleiter A und B bilden - bezogen auf das steckerseitige Ende des Anschlußkabels 60 - die Sende-Lichtleiter, durch die Lichtsignale aus dem Verbindungskabel in eine Steckdose hineingeleitet werden. Die Lichtleiter C und D bilden Empfangs-Lichtleiter, durch die das Kabel aus der Steckdose Lichtsignale empfängt. Man erkennt, daß der Stecker ST in unterschiedlichen Orientierungen in die zugehörige Steckdose eingesteckt werden kann und daß in jedem Fall eines der Fenster 21a,21b Lichtsignale in die Steckdose sendet, während eines der Fenster 21c,21d Lichtsignale aus der Steckdose empfängt.

Die bewegliche Steckdose SD oder Kupplung am anderen Ende des Verbindungskabels 60 enthält ebenfalls vier Fenster 21a,21b,21c und 21d, wobei die einander diagonal gegenüberliegenden Fenster 21a und 21b Empfangsfenster und die einander ebenfalls diagonal gegenüberliegenden Fenster 21c und 21d Sendefenster sind. Die Lichtleiter A und B sind in einem Y-Splitter zusammenfaßt, dessen Stamm mit einer Anschlußvorrichtung 61 verbunden ist und die Lichtleiter C und D sind ebenfalls in einem Y-Splitter zusammenfaßt, dessen Stamm mit einer Anschlußvorrichtung 62 verbunden ist. Somit kann in die bewegliche Steckdose SD ein Stecker in jeder der beiden möglichen Orientierungen eingesteckt werden, wobei immer ein Sendefenster des Steckers mit einem Empfangsfenster der beweglichen Steckdose SD zusammenfällt und ein Empfangsfenster des Steckers mit einem Sendefenster der beweglichen Steckdose zusammenfällt.

## Patentansprüche

1. Elektrische Steckvorrichtung aus einer Steckdose (SD) und einem Stecker (ST), wobei der Stecker in unterschiedlichen Orientierung seiner Kontaktelemente in die Steckdose einsteckbar und für den Anschluß an ein Kabel (46) ausgebildet ist, das außer elektrischen Leitungen (48) Lichtleiter (45,47) enthält,
**dadurch gekennzeichnet,**
daß die Steckdose (SD) und/oder der Stecker (ST) außerhalb der Kontaktelemente (12) mindestens zwei Fenster (21a,21b;31a,31b) für den Lichtaustausch mit dem jeweils anderen Teil aufweist, die durch einen Y-Splitter (23;33) gekoppelt und so angeordnet sind, daß in jeder Orientierung des Steckers (ST) mindestens zwei Fenster des Steckers (ST) mit zwei Fenstern der Steckdose (SD) zur Deckung kommen.

2. Steckvorrichtung nach Anspruch 1, dadurch gekennzeichnet, daß drei Fenster (21a,21b,22;31a,31b,32) in einer Reihe angeordnet sind, wobei das mittlere Fenster (22;32) im Zentrum von Steckdose bzw. Stecker liegt, während die beiden äußeren Fenster seitlich von der durch die Kontaktelemente (12) gebildeten Ebene symmetrisch zu dieser Ebene angeordnet sind.

3. Steckvorrichtung nach Anspruch 1 oder 2, dadurch gekennzeichnet, daß der Y-Splitter Bestandteil eines Lichtleiter-Anschlußstücks (20;40) ist, das eine selbständige Einheit bildet, die in den Stecker bzw. die Steckdose eingesetzt ist.

4. Steckvorrichtung nach Anspruch 3, dadurch gekennzeichnet, daß das Lichtleiter-Anschlußstück (20;40) einen Formkörper enthält, in den der Y-Splitter eingebettet ist.

5. Steckvorrichtung nach Anspruch 4, dadurch gekennzeichnet, daß der Formkörper außer dem Y-Splitter (23;33) noch mindestens einen weiteren Lichtleiter (24;34) enthält.

6. Steckvorrichtung nach einem der Ansprüche 3-5, dadurch gekennzeichnet, daß an dem Lichtleiter-Anschlußstsück (20) ein Schaltungsträger (26) befestigt ist, der einen mit dem Stamm (23c) des Y-Splitters zusammenwirkenden Lichtsender (S) oder Lichtempfänger (E) trägt.

7. Steckvorrichtung nach einem der Ansprüche 1-6, dadurch gekennzeichnet, daß der Y-Splitter (23) aus einem Formteil besteht, das einen weiteren Lichtleiter (24) umhüllt.

8. Steckvorrichtung nach einem der Ansprüche 3-7, dadurch gekennzeichnet, daß das Lichtleiter-Anschlußstück (40) Anschlußvorrichtungen (41) für den Anschluß externer Lichtleiter (45,47) aufweist.

9. Steckvorrichtung nach einem der Ansprüche 1-8, dadurch gekennzeichnet, daß an Steckdose (SD) und Stecker (ST) jeweils vier Fenster (21a,21b, 21c,21d) im Quadrat angeordnet sind, wobei jeweils zwei diagonal gegenüberliegende Fenster durch einen Y-Splitter (23',23'') miteinander gekoppelt sind.

10. Steckvorrichtung nach Anspruch 2, dadurch gekennzeichnet, daß die Steckdose (SD) und der Stecker (ST) jeweils einen Y-Splitter (23,33) enthalten.

11. Stecker für eine elektrische Steckvorrichtung nach einem der vorhergehenden Ansprüche mit mindestens einem Y-Splitter (23;33).

12. Steckdose für eine elektrische Steckvorrichtung nach einem der Ansprüche 1 bis 10, mit mindestens einem Y-Splitter (23;33).

13. Elektrisches Verbindungskabel mit elektrischen Leitungen (48) und Lichtleitern (45,47) sowie einem an einem Ende vorgesehenen Stecker (ST) und einer am anderen Ende vorgesehenen Steckdose (SD), wobei der Stecker (ST) und die Steckdose (SD) zur Bildung einer elektrischen Steckvorrichtung nach einem der Ansprüche 1 bis 10 ausgebildet sind.
